Europäisches Patentamt

**European Patent Office**

Office européen des brevets

(11) Publication number: **0 190 895**
**A2**

# (12) EUROPEAN PATENT APPLICATION

(21) Application number: **86300679.7**

(22) Date of filing: **31.01.86**

(51) Int. Cl.⁴: **G 11 B 23/00**
**G 11 B 23/04**

(30) Priority: **02.02.85 GB 8502699**

(43) Date of publication of application:
**13.08.86 Bulletin 86/33**

(84) Designated Contracting States:
**AT BE CH DE FR GB IT LI LU NL SE**

(71) Applicant: **VIDEOTEK LIMITED**
**Unit 20/21 Royal Industrial Estate**
**Jarrow Tyne & Wear, NE32 3HR(GB)**

(72) Inventor: **Fechner, Heinz Jurgen Bernhard**
**63 Chester Road**
**Sunderland(GB)**

(74) Representative: **Gura, Henry Alan et al,**
**MEWBURN ELLIS & CO. 2/3 Cursitor Street**
**London EC4A 1BQ(GB)**

(54) **Anti-theft alarm devices for cassette players.**

(57) An anti-theft alarm device for a cassette player comprises a locking mechanism for location in the cassette-receiving slot of player and including a pair of opposed locking members (12) movable, under the influence of a control mechanism (6), from an inoperative position in which the device can be inserted into the cassette player to an operative position preventing removal of the device from the player and in which the locking members (12) frictionally engage opposed sidewalls of the cassette-receiving slot, means (22, 24, 26, 30, 32) being provided to retain the locking members (12) in their operative positions. The device further comprises a battery-operated electrical switching mechanism including a movement sensitive electrical switch (40) movable between an inoperative position and an operative position, and a warning mechanism (42) the circuit of which is primed on movement of the locking members (12) to their operative positions and is completed on movement of the switch (40) to its operative position.

FIG.1

- 1 -

ANTI-THEFT ALARM DEVICES FOR CASSETTE PLAYERS

This invention relates to anti-theft alarm devices for cassette players and has particular, though not exclusive application to such devices for car audio cassette players.

It is well recognised that car audio cassette players are prime targets for would-be thieves, and various alarm devices have been proposed with a view to preventing or deterring thefts of such machines.

One known type of anti-theft alarm device comprises a housing for external attachment to the body of the cassette player, the housing containing a movement-sensitive electric switch which, on any displacement of the cassette player from a normal rest position, is actuated to complete an associated electrical warning circuit, usually audible.

Alternative devices utilise ultrasonic Doppler systems including transmitters and receivers so arranged that any interruption of the transmitted sound waves, whether by movement of the cassette player itself or as a result of the interference of a moving object remote from the cassette player, results in actuation of an associated warning mechanism.

However, these known arrangements suffer from various disadvantages in that they either require the application of certain skills by the user when operating the device or they must be installed by a skilled person. Furthermore, the known devices are expensive to purchase and are time consuming to install.

It would be desirable to be able to provide an anti-theft alarm device for a cassette player which was relatively cheap to produce, easy to install and such that the deactivation and/or removal of which cannot be readily achieved other than by authorised personel.

According to the present invention there is provided an anti-theft alarm device for a cassette player provided with a cassette receiving slot therein, the device comprising a locking mechanism for location in the cassette-receiving slot and including a pair of opposed locking members movable, by means of a control mechanism, between inoperative positions permitting insertion of the locking mechanism into the cassette player and operative positions frictionally engaging opposed sidewalls of the cassette receiving slot and preventing removal of the locking mechanism from the cassette player, and means for retaining the locking members in their operative positions, the device further comprising a battery-operated, movement-sensitive electrical switching mechanism including a switch movable between an inoperative position and an operative position and a warning mechanism the circuit of which is primed on movement of said locking members to their operative positions and is completed on movement of said switch to its operative position.

Preferably the control mechanism comprises a slide member projecting from the locking mechanism and adapted to be operable from externally of the cassette player, axial movement of the slide member from a normal rest position to a displaced position resulting in lateral movement of the locking members from their inoperative positions to their operative positions.

Conveniently the slide member is resiliently biased into its normal rest position and the locking members are resiliently biased into their inoperative positions.

In a preferred device, the means for retaining the locking members in their operative positions comprises a key-operated cam member, said cam member being rotatable by the associated key from an 'off' position in which the slide member, on axial movement from its normal rest position, is returned by the resilient means to said rest position, through an 'intermediate' position in which the slide member, on axial movement from its normal rest position, is prevented from returning from a displaced position to is normal rest position, to a 'locked' position in which the cam member retains the slide member in its displaced position and therefore retains the locking members in their operative positions.

Such a device may include means which, with the cam member in its 'intermediate' position, prevent the slide member from returning to its normal rest position, said means comprising a first toothed ratchet on the slide member, and a correspondingly-toothed second ratchet which, with the cam member in its 'intermediate' position, is resiliently urged into engagement with said first ratchet on the slide member such as to permit movement of the slide member in a direction from the normal rest position but to prevent return movement of the slide member towards said normal rest position.

Preferably, the device includes an electrical contact member adapted for engagement by the slide member, and an associated electrical contact member in the circuit of the warning mechanism, movement of the slide member to a displaced position urging said contact members into electrical engagement whereby the circuit of the warning mechanism is primed.

Conveniently the device includes a housing containing the electrical switching mechanism, said housing being located externally of the cassette player when the device is in its operative position, the slide member extending through, to project from, said housing.

By way of example only, an embodiment of the invention will now be described in greater detail with reference to the accompanying drawings of which:

Fig. 1 is a plan view from above of the locking mechanism of an anti-theft alarm device according to the invention;

Fig. 2 is a side view, partly in vertical section, of the means for retaining the slide member in its displaced position;

Fig. 3 is a plan view of a device acccording to the invention, and

Fig. 4 shows a device according to the invention in position in a cassette player.

Referring to the drawings, the illustrated device is particularly suited for use in a car audio cassette player, although the device of the invention has application to any cassette player with a cassette-receiving slot therein, such as a video camera.

The device comprises a front moulded housing 2 shaped to fit into the cassette-receiving slot of the cassette player and containing a locking mechanism indicated generally at 4. This mechanism includes a generally flat, elongate slide member 6 extending rearwardly from the housing 2 and having an operative front end 8 of generally wedge-shape in plan view. The slide member is resiliently biased to a normal rest position by a coil spring 10 reacting between a fixed member within the housing 2 and the slide member itself.

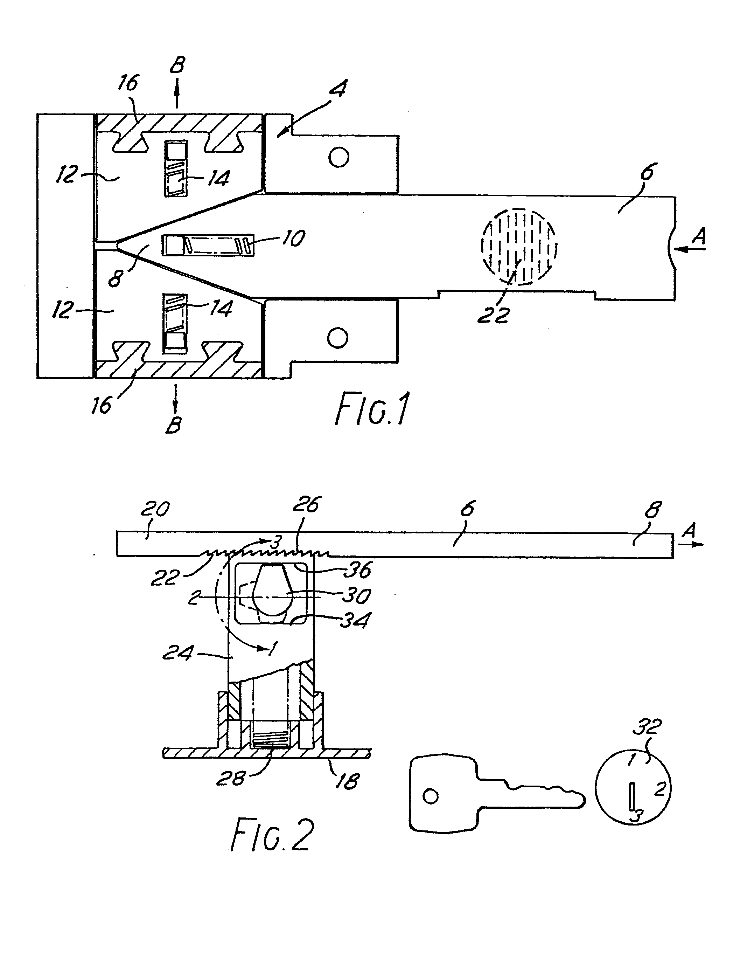

Positioned one to either side of the wedge-shaped operative end 8 of the slide member 6 are a pair of locking members 12 each resiliently biased by an associated coil spring 14 to an inoperative position within the housing 2 in which an angled inner surface of the member 12 abuts the associated side of the wedge-shaped operative end 8 of the slide member 6 as seen in Fig. 1.

In this position of the locking members 12, the outer surfaces thereof, which carry rubber friction pads 16, are flush with the sides of the housing 2.

The arrangement is such that, on movement of the slide member 6 in the direction of arrow 'A' in Fig. 1, against the bias of the spring 10, the forward movement of the operative end 8 of the slide member results in lateral movement of the locking members 12 in the direction of arrows 'B' in Fig. 1, against the bias of the springs 14 whereby the pads 16 are urged into frictional contact with the opposed sidewalls of the cassette-receiving slot of the cassette player.

The device further includes means for controlling the movement of the slide member and for locking it in a displaced position.

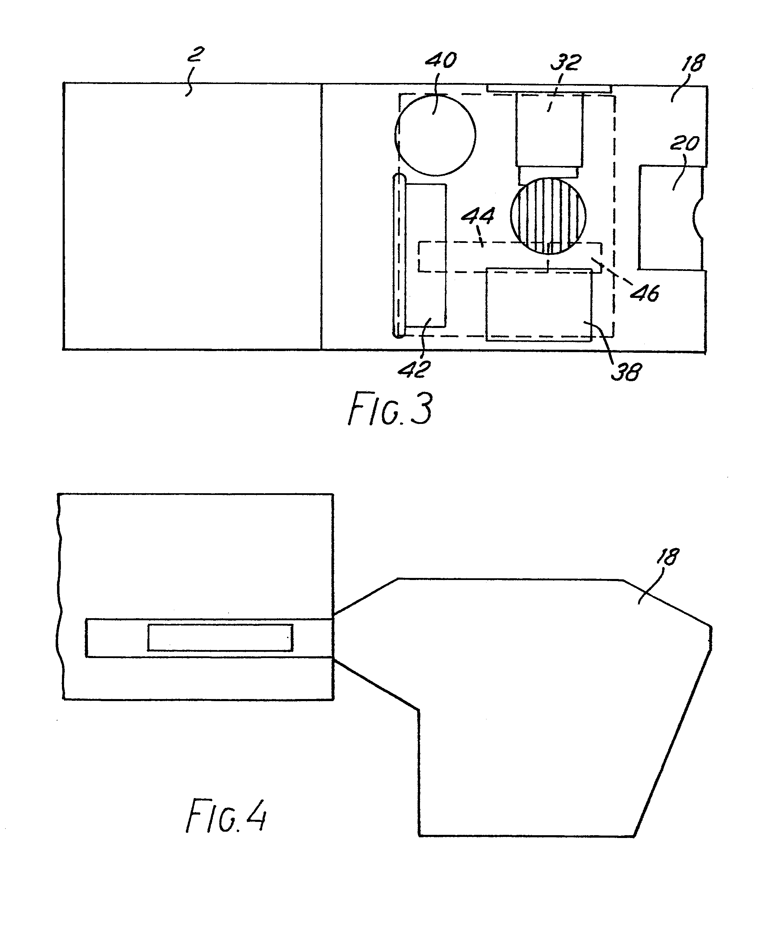

More particularly the device includes a rear moulded housing 18 adapted to be located externally of the cassette player when the device is in its operative position, and through which housing 18 the slide member extends such that the rear end 20 of the slide member projects from the housing 18 as seen in Fig. 3.

The undersurface of the slide member 6 is provided, adjacent its rear end, with a series of teeth forming a first ratchet 22. A hollow tubular member 24 mounted in the housing 18 to be axially movable therein is provided with a series of teeth around its innermost end forming a second ratchet 26, the member 24 being resiliently urged by a coil spring 28 towards a position in which the first and second ratchets engage one another, the arrangement of the teeth of the ratchets 22,26 being such that, on engagement, the slide member can move in the direction of arrow 'A' of Figs. 1 and 2 but not in the return direction.

Housed within the tubular member 24 to be rotatable about an axis fixed within the housing 18 is a cam 30 adapted to co-operate with surfaces on the member 24. The cam 30 is rotatable by means of a key-operated lock 32 mounted in the housing 18, said lock having three positions associated with three positions of the cam.

In the first, or 'off' position of the lock 32, the cam 30 is urged against a surface 34 of the member 24 to hold said member 24 down against the bias of the spring 28 such that the ratchets 22, 26 are disengaged from one another and the slide member can move freely forwards and backwards.

In the second, or 'intermediate' position of the lock 32, the cam 30 is out of engagement with the tubular member 24 whereby the spring urges the ratchet 26 into engagement with the ratchet 22 such that the slide member 6 can be moved from its normal rest position in the direction of

- 8 -

arrow 'A' to displace the locking members 12 towards their operative positions, but return of the slide member 6 towards its normal rest position is prevented by cooperation between the teeth of the ratchets 22,26.

In the third, or 'locked' position of the lock 32, the cam 30 engages a surface 36 of the tubular member 24 to urge the ratchet 26 into positive locking engagement with the ratchet 22 whereby the slide member 6, and therefore the locking member 12, are locked in position.

The slide member 6 and locking member 12 can then be released by appropriate turning of the lock 32 from the 'locked' to the 'off' position.

The housing 18 also contains an electrical switching mechanism powered by a battery contained in a compartment 38 and including a movement-and vibration-sensitive switch 40, which reacts to any displacement thereof, and an audible electro-mechanical alarm 42 actuation of which is dependent upon the condition of the switch 40.

Completion of the warning circuit of the alarm 42 is also dependent upon the position of the slide member 6, in that said circuit is only primed for completion by the switch 40 when the slide member 6 is in a displaced position associated with the locking members 12 being in operative positions. More particularly, displacement of the slide member 6 from its normal rest position moves an electrical spring contact 44 into electrical contact with an associated electrical contact pad 46 of the printed circuit board of the warning mechanism whereby the warning circuit is primed.

The electrical switching mechanism further includes a time-delay circuit so arranged that the warning circuit cannot be completed by the switch 40 for a predetermined time period, typically 15 to 20 seconds, after the circuit has been primed.

The described device operates as follows. With the slide member 6 in its normal rest position, the housing 2 containing the locking member is inserted in the cassette-receiving slot of the player to be protected. The lock 32 is turned by its key from the 'off' position to the 'intermediate' position to prime the ratchets 22 and 26, and the slide member 6 is pushed by means of its end 20 in the direction of arrow 'A' with the ratchet 22 riding over the resiliently biased ratchet 26 until resistance is felt, indicating that the locking members 12 have reached their operative positions frictionally engaging the opposite sidewalls of the slot of the cassette player. During this movement of the slide member 6, the warning circuit of the audible alarm has been primed. The lock is then turned to its 'locked' position thereby moving the cam 30 to hold the slide member 6 in its displaced position and the locking members 12 in their operative positions. The key is then removed from the lock 32 and the anti-theft alarm device is in active use.

- 10 -

The time-delay built into the warning circuit enables the key to be removed and, in the case of a car cassette player, enables the driver to leave the car and lock it without triggering the switch 40 and therefore actuating the alarm. Thereafter any vibration of the cassette player, either directly through attempts to remove or as a result of unauthorised movement of the car, will cause the switch 40 to close and the warning circuit is completed. The sensitivity of the switch 40 may be adjustable to enable the detection of particular vibrations as required.

Removal of the device from the player can only be achieved by appropriate turning of the lock 32 through its particular key from the 'locked' position back to the 'off' position.

In use, the rubber pads 16 on the locking members 12 reduce the risk of damage to the inside of the cassette player, while the described ratchet arrangement operative on setting of the device allows the operator to exert the pressure suitable for the particular type and dimensions of cassette player slot.

A major advantage of the described device is that it includes a portion, namely the housing 18, that is readily visible to a would-be thief, thus acting as a deterrent to any attempt to effect unauthorised removal of the player.  Any unauthorised tampering with the cassette
player will of course actuate the audible alarm which
cannot be turned off without use of the correct key
for the lock 32.

0190895

- 12 -

CLAIMS

1. An anti-theft alarm device for a cassette player provided with a cassette-receiving slot therein, characterised by a locking mechanism for location in the cassette-receiving slot and including a pair of opposed locking members (8) movable, by means of a control mechanism (6), between inoperative positions permitting insertion of the locking mechanism into the cassette player and operative positions frictionally engaging opposed sidewalls of the cassette receiving slot and preventing removal of the locking mechanism from the cassette player, and means (22,24,26,30, 32) for retaining the locking members (12) in their operative positions, the device further comprising a battery-operated, movement-sensitive electrical switching mechanism including a switch (40) movable between an inoperative position and an operative position and a warning mechanism (42) the circuit of which is primed on movement of said locking members (12) to their operative positions and is completed on movement of said switch (40) to its operative position.

2. An anti-theft alarm device as claimed in claim 1 in which the control mechanism comprises a slide member (6) projecting from the locking mechanism and adapted to be operable from externally of the cassette player, axial movement of the slide member (6) from a normal rest position to a displaced position resulting in lateral movement of the locking members (12) from their inoperative positions to their operative positions.

3. An anti-theft alarm device as claimed in claim 2 in which resilient means (10) bias the slide member (6) into its normal rest position projecting from the locking mechanism, and further resilient means (14) bias the locking members (12) into their inoperative positions.

4. An anti-theft alarm device as claimed in claim 3 in which the means for retaining the locking members (12) in their operative positions comprises a key-operated cam member (30), said cam member (30) being rotatable by the associated key from an 'off' position in which the slide member (6), on axial movement from its normal rest position, is returned by the resilient means (10) to said rest position, through an 'intermediate' position in which the slide member ( 6 ), on axial movement from its normal rest position, is prevented from returning from a displaced position to its normal rest position, to a 'locked' position in which the cam member (30) retains the slide member (6) in its displaced position and therefore retains the locking members (12) in their operative positions.

5. An anti-theft alarm device as claimed in claim 4 and including means which, with the cam member (30) in its 'intermediate' position, prevent the slide member (6) from returning to its normal rest position, said means comprising a first toothed ratchet (22) on the slide member (6), and a correspondingly-toothed second ratchet (26) which, with the cam member (30) in its 'intermediate' position, is resiliently urged into engagement with said first ratchet (22) on the slide member (6) such as to permit movement of the slide member (6) in a direction ('A') from the normal rest position but to prevent return movement of the slide member (6) towards said normal rest position.

6. An anti-theft alarm device as claimed in any one of claims 2 to 5 and including an electrical contact member (44) adapted for engagement by the slide member (6), and an associated electrical contact member (46) in the circuit of the warning mechanism (42), movement of the slide member (6) to a displaced position urging said contact member (44,46) into electrical engagement whereby the circuit of the warning mechanism (42) is primed.

7. An anti-theft alarm device as claimed in any one of claims 2 to 6 and including a housing (18) containing the electrical switching mechanism, said housing (18) being located externally of the cassette player when the device is in its operative position, the slide member (6) extending through, to project from, said housing (18).

8. An anti-theft alarm device as claimed in any one of claims 2 to 7 in which the slide member (6) includes an operative end (8) within the locking mechanism and engaging with the locking members (12), said operative end (8) of the slide member (6) being of generally wedge-shape, the locking member (12) being provided with correspondingly angled surfaces thereon for abutment by associated sides of the wedge-shaped end (8) of the slide member (6) whereby, on axial movement of the slide member (6) to a displaced position thereof, the locking members (12) are displaced laterally of the slide member (6) towards their operative positions.

9. An anti-theft alarm device as claimed in claim 8 and including, on the faces of the locking members (12) remote from the angled surfaces thereon, friction pads (16) for said frictional engagement with the opposed sidewalls of the cassette receiving slot.

10. An anti-theft alarm device as claimed in any one of claims 1 to 9 in which the circuit of the electrical switching mechanism includes a time delay whereby said circuit cannot be completed on movement of the switch (40) to its operative position for a predetermined time after the locking members (12) have reached their operative positions.

1/2

0190895

FIG.1

FIG.2

FIG.3

FIG.4